# EUROPÄISCHE PATENTANMELDUNG

(11) **EP 0 941 883 A2**
(43) Veröffentlichungstag der Anmeldung: **15.09.1999**
(21) Anmeldenummer: 99101521.5
(22) Anmeldetag: 28.01.1999
(51) Int. Cl.: B60K 6/04

(54) **Hybridantrieb für ein Kraftfahrzeug**

(30) Priorität: 10.03.1998 DE 19810374
(71) Anmelder: Bayerische Motoren Werke Aktiengesellschaft, 80788 München (DE)
(72) Erfinder: Glonner, Hans, 85276 Pfaffenhofen (DE)

(57) **Zusammenfassung**

Es wird eine Fahrzeugantriebseinheit beschrieben, mindestens bestehend aus einem Verbrennungsmotor mit einem Gehäuse und einer Kurbelwelle, aus einer elektrischen Maschine, aus einem Getriebe und aus einem Planetengetriebe, mit mindestens drei Drehelementen, einem Sonnenrad, einem Planetenradträger und einem Hohlrad, wobei das Sonnenrad von der elektrischen Maschine, das Hohlrad vom Verbrennungsmotor und das Getriebe vom Planetenradträger antreibbar ist. Zur Steuerung einer Antriebsleistung des Getriebes ist mindestens eine Kupplung vorgesehen, die im geschlossenen Zustand Planetenradträger und Hohlrad verbindet. Zwischen Kurbelwelle und Gehäuse des Verbrennungsmotors ist ein Bremsband oder eine weitere Kupplung oder ein Freilauf dazwischen geschaltet, wobei der Freilauf eine Drehrichtung der Kurbelwelle entgegengesetzt zur Laufrichtung der Kurbelwelle beim Betrieb des Verbrennungsmotors blockiert.

## Beschreibung

Es ist bereits bekannt, Fahrzeuge mit einem Hybridantrieb auszustatten, einer Fahrzeugantriebseinheit, bei der das Fahrzeug sowohl mit einem Verbrennungsmotor, als auch mit einer elektrischen Maschine angetrieben werden kann.

Die EP 769 404 A1 beschreibt eine solche Fahrzeugantriebseinheit, bei der Verbrennungsmotor und elektrische Maschine durch ein Summationsgetriebe parallel zusammengeschaltet sind und ein Automatikgetriebe antreiben. Das Summationsgetriebe ist ein Planetengetriebe mit mindestens drei Drehelementen, einem Sonnenrad, einem Planetenradträger und einem Hohlrad, wobei das Sonnenrad von der elektrischen Maschine, das Hohlrad vom Verbrennungsmotor und das Automatikgetriebe vom Planetenradträger angetrieben ist. Um die Drehmomente des Verbrennungsmotors und der elektrischen Maschine auf verschiedene Weise zur Steuerung der Antriebsleistung des Automatikgetriebes zusammenschalten zu können, ist das Planetengetriebe mit Kupplungen ausgestattet. Der Raumbedarf für ein so ausgebildetes Planetengetriebe ist groß im Vergleich zum zur Verfügung stehenden Raum zwischen Verbrennungsmotor und Automatikgetriebe.

Insbesondere bei einem längs im Fahrzeug eingebauten Antrieb mit Frontmotor und Hinterachsantrieb verlängert sich der Antriebsstrang durch den Einbau des Summationsgetriebes mehr, als es der freie Abstand zwischen Getriebe und Karosserie zuläßt. Dadurch sind Karosserieänderungen bei Verwendung von aufwendig gebauten Summationsgetrieben unumgänglich, insbesondere bei Frontmotor mit Heckantrieb. Selbst wenn bei entsprechender Auslegung der elektrischen Maschine der Drehmomentwandler am Eingang des Automatikgetriebes zum Anfahren entfallen kann und dessen Bauraum für das Summationsgetriebe zur Verfügung steht, ist der Platzbedarf für den bekannten Hybridantrieb größer.

Daher ist es Aufgabe der Erfindung, einen Antriebsstrang eines Hybridantriebs so zu gestalten, daß der Abstand, entlang dessen Längsachse, zwischen Verbrennungsmotor und Getriebe möglichst klein gehalten werden kann.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist vorgesehen, bei einer Fahrzeugantriebseinheit, mindestens bestehend aus einem Verbrennungsmotor mit einem Gehäuse und einer Kurbelwelle, aus einer elektrischen Maschine, aus einem Getriebe mit einer Ausgangswelle zum Antrieb von Fahrzeugrädern und aus einem Planetengetriebe, mit mindestens drei Drehelementen, einem Sonnenrad, einem Planetenradträger und einem Hohlrad, wobei das Sonnenrad von der elektrischen Maschine, das Hohlrad vom Verbrennungsmotor und die Eingangswelle des Getriebes vom Planetenradträger antreibbar ist, zur Steuerung einer Antriebsleistung des Getriebes mindestens eine Kupplung zu verwenden. Diese Kupplung verbindet im geschlossenen Zustand Planetenradträger und Hohlrad. Desweiteren ist eine Bremsbandeinrichtung oder eine weitere Kupplung und/oder ein Freilauf zwischen Kurbelwelle und Gehäuse des Verbrennungsmotors geschaltet.

Das hat den Vorteil, daß das als Planetengetriebe ausgebildete Summationsgetriebe zur parallelen Zusammenschaltung von Verbrennungsmotor und elektrischer Maschine nur eine Kupplung und dazu eine Bremsbandeinrichtung oder eine weitere Kupplung und/oder einen Freilauf benötigt, was den Platzbedarf des Summationsgetriebes verringert.

Wenn anstelle eines Freilaufs ein Bremsband oder eine weitere Kupplung verwendet wird, kann die elektrische Maschine in allen vier Quadranten wirken, das heißt, die elektrische Maschine dreht zum Rückwärtsfahren in die entsprechend umgekehrte Richtung. Vorteilhafterweise werden dadurch andere Einrichtungen zum Ermöglichen des Rückwärtsfahrens eingespart.

Eine bevorzugte Ausführung der Erfindung sieht vor, daß der Freilauf eine Drehrichtung der Kurbelwelle blockiert, die entgegengesetzt zur Laufrichtung der Kurbelwelle beim Betrieb des Verbrennungsmotors gerichtet ist.

Eine weitere bevorzugte Ausführung der Erfindung sieht vor, daß ein Drehschwingungsdämpfer zwischen Verbrennungsmotor und Getriebe geschaltet ist. Dies wirkt sich insbesondere dann günstig auf den Platzbedarf des Antriebsstranges aus, wenn der Drehschwingungsdämpfer unmittelbar nach dem Verbrennungsmotor angeordnet ist.

Bei einer weiteren bevorzugten Ausführung der Erfindung ist eine Ölpumpe vorgesehen, die sowohl von der elektrischen Maschine, als auch von einem zweiten Elektromotor, oder nur vom zweiten Elektromotor angetrieben werden kann.

Das hat den Vorteil, daß der Öldruck, falls zur Steuerung des Getriebes notwendig, auch aufrechterhalten werden kann, wenn die Drehzahl der elektrischen Maschine geringer ist als die minimale Ölpumpendrehzahl. Während dieser Antriebsphase wird die Ölpumpe vom zweiten Elektromotor angetrieben.

Bei einer vorteilhaften Ausführung der Erfindung ist vorgesehen, daß das Planetengetriebe die Eingangswelle des Getriebes und die elektrische Maschine bei stillstehendem Hohlrad in einem Drehzahlverhältnis von etwa eins zu zwei bis drei koppelt.

Die Untersetzung der elektrischen Maschine hat den Vorteil, daß diese zum Anfahren des Fahrzeuges und zum Starten des Verbrennungsmotors verwendet werden kann, wozu die Kupplung geschlossen wird, sobald der Planetenradträger, bzw. der Antrieb des Getriebes, nach dem Anfahren die der Leerlaufdrehzahl des Verbrennungsmotors entsprechende Geschwindigkeit erreicht hat. Bei geschlossener Kupplung ist die Übersetzung eins zu eins. Durch den Übersetzungssprung wird Rotationsenergie frei aufgrund der Massenträgheit der elektrischen Maschine. Diese Energie wird zum Starten des Verbrennungsmotors verwendet. Beim Betrieb des Verbrennungsmotors kann die elektrische Maschine als Booster wirken. Ein Generatorbetrieb der elektrischen Maschine erfolgt ebenfalls mit einer Übersetzung von eins zu eins. Durch das Laden des Energiespeichers wird Bremsenergie zurückgewonnen.

Bei weiteren vorteilhaften Ausführungen der Erfindung ist vorgesehen, daß das Getriebe ein Getriebe zur stufenlosen Übersetzungsänderung, ein Toroidgetriebe oder ein manuell oder automatisch schaltbares Stufengetriebe ist.

Die Verwendung eines Getriebes mit stufenloser Übersetzungsänderung hat den Vorteil, daß einerseits zur besseren Anpassung die Übersetzung innerhalb der Spreizung stufenlos variiert werden kann und andererseits ein solches Getriebe noch kleiner baut als ein Automatikgetriebe. Dabei sind, mit einer elektrischen Maschine als Anfahrmittel, die sonst bei Getrieben mit stufenloser Übersetzungsänderung notwendigen Maßnahmen für das Anfahren bei Verzweigungsgetrieben für Unendlichübersetzung oder Wandler vorteilhafterweise nicht nötig. Das vermeidet die bekannten Nachteile des Entstehens von Blindleistung wie im Fall von Wandern und großem Kriechmoment bei Unendlichübersetzung.

Die Verwendung eines Toroidgetriebes bringt weitere Vorteile bezüglich kompakterer Bauweise, Gewichtseinsparung und besserer Lastpunktanpassung.

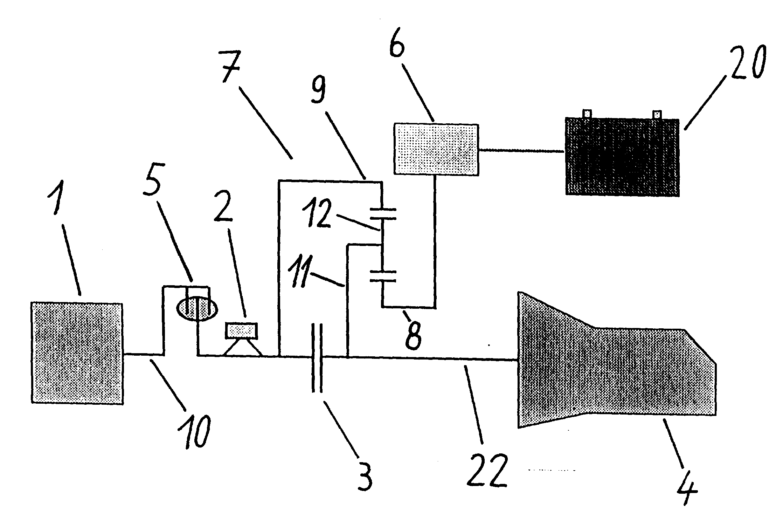

Ein bevorzugtes Ausführungsbeispiel der Erfindung ist in der nachfolgenden Beschreibung und der zugehörigen Zeichnung näher dargestellt. Die einzige Figur zeigt eine schematische Funktionsskizze der Ankopplung einer elektrischen Maschine an einen Antriebsstrang aus Verbrennungsmotor und Getriebe gemäß der Erfindung.

Ein Verbrennungsmotor 1 ist über einen Freilauf 2 und eine schaltbare Kupplung 3 mit der Eingangswelle 22 eines Getriebes 4 verbunden. In diesen Antriebsstrang ist nach dem Verbrennungsmotor 1 ein Drehschwingungsdämpfer 5 dazwischengeschaltet. Ein bei konventionellen Antriebssträngen eventuell vorhandener Drehmomentwandler zum Anfahren kann entfallen. Dies deshalb, weil zum Anfahren eine elektrische Maschine 6 verwendet wird, die das Sonnenrad 8 eines als Planetengetriebe 7 ausgebildeten Summationsgetriebes antreibt. Das Planetengetriebe 7 ist so in den Antriebsstrang zwischen Verbrennungsmotor 1 und Getriebe 4 dazwischengeschaltet, daß ein Hohlrad 9 von der Abtriebswelle 10 des Verbrennungsmotors 1 zwischen Freilauf 2 und Kupplung 3 angetrieben wird. Ein Planetenradträger 11, angetrieben vom Sonnenrad 8 über Planetenräder 12 treibt die Eingangswelle 22 des Getriebes 4 an, nach der Kupplung 3. Die Steuerung der Antriebsart erfolgt durch die Kupplung 3.

Mit der Bezugsziffer 20 ist die Stromversorgungseinrichtung der elektrischen Maschine bezeichnet, hier symbolisch als Batterie dargestellt.

Zum Anfahren des Fahrzeugs wird ausschließlich die elektrische Maschine 6 bei geöffneter Kupplung 3 benutzt. Das Sonnenrad 8 treibt über Planetenräder 12 den Planetenradträger 11 an. Durch diesen wird das Drehmoment der elektrischen Maschine 6 mit einer Drehzahlübersetzung von ungefähr eins zu drei auf die Eingangswelle 22 übertragen und in das Getriebe 4 eingeleitet. Die elektrische Maschine 6 ist so ausgelegt, daß ein hydraulischer Drehmomentwandler zum Anfahren des Fahrzeuges entfallen kann. Der Freilauf 2 verhindert das Rückdrehen des Hohlrads 9 entgegengesetzt zur Antriebsdrehrichtung.

Anstelle des Freilaufs 2 kann bei alternativen Ausführungsformen allerdings auch ein nicht gezeichnetes Bremsband oder eine nicht gezeichnete weitere Kupplung verwendet werden. Dadurch kann die elektrische Maschine 6 in allen vier Quadranten wirken, das heißt, die elektrische Maschine 6 dreht für Rückwärtsfahren in die entsprechend umgekehrte Richtung. Vorteilhafterweise werden dadurch andere Einrichtungen zum Ermöglichen des Rückwärtsfahrens eingespart.

Den eventuell nötigen Öldruck zur Steuerung des Getriebes 4 erzeugt eine nicht gezeichnete Ölpumpe. Diese kann zum Beispiel von einem nicht gezeichneten zweiten Elektromotor angetrieben werden, solange die elektrische Maschine 6, mit der die Ölpumpe ebenfalls antriebsmäßig verbunden sein kann, noch langsamer läuft als die minimale Pumpendrehzahl zur Öldruckerzeugung. Auf diese Weise ist es möglich, im Getriebe 4 die notwendigen Kupplungen zu steuern, auch wenn die elektrische Maschine 6 stillsteht. Bei genügend hoher Drehzahl der elektrischen Maschine 6 wird der zweite Elektromotor abgeschaltet. Zu ihrem Antrieb ist die Ölpumpe über jeweils nicht gezeichnete weitere Freiläufe mit der elektrischen Maschine 6 bzw. dem zweiten Elektromotor verbunden, wobei statt der Verwendung von Freiläufen auch die Verwendung von zwei Ölpumpen denkbar wäre. Desweiteren kann als Alternative nur eine Ölpumpe permanent durch eine elektrische Hilfsmaschine bedarfsgerecht angetrieben werden.

Treibt die elektrische Maschine 6 die Eingangswelle 22 mit einer Drehzahl, die gleich oder größer ist als die Leerlaufdrehzahl des Verbrennungsmotors 1, kann die Kupplung 3 geschlossen werden. In Abhängigkeit der Schließrampe entsteht eine mehr oder weniger große Momentenüberhöhung, die zum Starten des Verbrennungsmotors 1 genutzt wird. Bei jetzt geschlossener Kupplung 3 und angetriebenem Hohlrad 9 ist die Übersetzung des Planetengetriebes 7 eins zu eins. Die elektrische Maschine 6 kann jetzt als Booster wirken. Es addieren sich dann beide Drehmomente von Verbrennungsmotor 1 und elektrischer Maschine 6 im Planetengetriebe 7 zum Antrieb des Getriebes 4.

Zur Steuerung des Antriebs werden im Planetengetriebe 7 nur eine Kupplung 3 und ein Freilauf 2 benötigt, was sich günstig auf die Baulänge des Planetengetriebes 7 auswirkt, das dann zwischen Verbrennungsmotor 1 und Getriebe 4 ohne Karosserieänderungen am Fahrzeug einbaubar ist.

## Patentansprüche

1. Fahrzeugantriebseinheit, mindestens bestehend aus einem Verbrennungsmotor (1) mit einem Gehäuse und einer Kurbelwelle, aus einer elektrischen Maschine (6), aus einem Getriebe (4) mit einer Ausgangswelle zum Antrieb von Fahrzeugrädern und aus einem Planetengetriebe (7), mit mindestens drei Drehelementen, einem Sonnenrad (8), einem Planetenradträger (11) und einem Hohlrad (9), wobei das Sonnenrad (8) von der elektrischen Maschine (6), das Hohlrad (9) vom Verbrennungsmotor (1) und eine Eingangswelle (22) des Getriebes (4) vom Planetenradträger (11) antreibbar ist und zur Steuerung einer Antriebsleistung des Getriebes (4) mindestens eine Kupplung (3) vorgesehen ist, dadurch gekennzeichnet, daß die Kupplung (3) im geschlossenen Zustand Planetenradträger (11) und Hohlrad (9) verbindet und eine Bremsbandeinrichtung oder eine weitere Kupplung und/oder ein Freilauf (2) zwischen Kurbelwelle und Gehäuse des Verbrennungsmotors (1) geschaltet ist.

2. Fahrzeugantriebseinheit nach Anspruch 1, dadurch gekennzeichnet, daß der Freilauf (2) eine Drehrichtung der Kurbelwelle blockiert, die entgegengesetzt zur Laufrichtung der Kurbelwelle beim Betrieb des Verbrennungsmotors (1) gerichtet ist.

3. Fahrzeugantriebseinheit nach Anspruch 1 oder 2, dadurch gekennzeichnet, daß ein Drehschwingungsdämpfer (5) zwischen Verbrennungsmotor (1) und Getriebe (4) geschaltet ist.

4. Fahrzeugantriebseinheit nach einem der Ansprüche 1 bis 3, dadurch gekennzeichnet, daß eine Ölpumpe vorgesehen ist, die von einem zweiten Elektromotor angetrieben wird oder sowohl von der elektrischen Maschine (6), als auch von dem zweiten Elektromotor angetrieben werden kann.

5. Fahrzeugantriebseinheit nach einem der Ansprüche 1 bis 4, dadurch gekennzeichnet, daß das Planetengetriebe (7) die Eingangswelle (22) des Getriebes (4) und die elektrische Maschine (6) bei stillstehendem Hohlrad (9) in einem Drehzahlverhältnis von etwa eins zu zwei oder größer koppelt.

6. Fahrzeugantriebseinheit nach einem der Ansprüche 1 bis 5, dadurch gekennzeichnet, daß das Getriebe (4) ein Getriebe zur stufenlosen Übersetzungsänderung ist.

7. Fahrzeugantriebseinheit nach einem der Ansprüche 1 bis 5, dadurch gekennzeichnet, daß das Getriebe (4) ein Toroidgetriebe ist.

8. Fahrzeugantriebseinheit nach einem der Ansprüche 1 bis 5, dadurch gekennzeichnet, daß das Getriebe (4) ein manuell oder automatisch schaltbares Stufengetriebe ist.
